# EUROPEAN PATENT SPECIFICATION

(11) **EP 1 948 344 B1**
(45) Date of publication and mention of the grant of the patent: **16.01.2013**
(21) Application number: 06790341.9
(22) Date of filing: 09.10.2006
(51) Int. Cl.: B01D 29/00, B01D 61/00, C02F 1/00, C02F 1/44

(54) **PURIFIED WATER PRODUCTION AND DISTRIBUTION SYSTEM**
HERSTELLUNGS- UND VERTEILUNGSSYSTEM FÜR GEREINIGTES WASSER
SYSTEME DE PRODUCTION ET DE DISTRIBUTION D'EAU PURIFIEE

(30) Priority: 20.10.2005 AU 2005905827; 25.11.2005 AU 2005906575
(43) Date of publication of application: 30.07.2008
(73) Proprietor: Osmoflo Pty. Ltd., Torrensville, South Australia 5031 (AU)
(72) Inventor: FABIG, Marcus, John, College Park, South Australia 5069 (AU)
(74) Representative: Copsey, Timothy Graham
(86) International application number: PCT/AU2006/001471
(87) International publication number: WO 2007/045015

(56) References cited:
- EP-A- 0 599 281
- EP-A2- 0 599 281
- WO-A-01/41895
- WO-A1-00/00274
- AU-B3- 692 750
- DE-A1- 3 106 772
- US-A- 4 773 993
- US-A- 5 032 265
- US-A1- 2003 094 406
- US-B2- 6 908 546

## Description

### INTRODUCTION

This invention relates to a water purification and distribution system that can maintain the microbiological purity of the purified water.

### BACKGROUND

There are presently a variety of industrial and medical devices used to purify water to meet microbiological purity requirements. Water microbiological purity is generally measured by culturing and counting the number of biological cells and/or the by-products of damaged or dead biological cells in a given water sample volume. The water microbiological purity requirements for an application are most often stated in terms of maximum limits for Colony Forming Units (CFU) and Endotoxin Units (EU) per millilitre of water, that is, CFU/ml and EU/ml respectively. Typically, requirements for specific applications are tabled in standards such as ANSI/AAMI RD62.

Conventional devices for water purification include, but are not limited to, the application of Chlorination/ Dechlorination systems, Mechanical Filtration, Ultraviolet Radiation (UV), Ozonation, Deionisation (DI) and Reverse Osmosis (RO) and a device offered for water purification may be comprised of a combination of these devices. The device variety increases further when variations on system design and the control of each of these device types are considered.

It is well known in the art that a water purification system cannot rely solely upon the production of water to purity specifications to guarantee that the water delivered at point of usage will still meet the specifications. This is because the water purity specifications allow for an amount of biological contaminant that can, over time, find sites within the device system to inhabit and proliferate or there could be an adverse event causing contamination of the device. Therefore water purification devices require a means to maintain system microbiological cleanliness. These include, but are not limited to, chemical disinfection, heat disinfection and flushing on a continuous or periodic basis.

Purification can be based on the use of Reverse Osmosis (RO) membranes which can be either single or double pass reverse osmosis configurations.

The use of Reverse Osmosis (RO) for water purification to meet microbiological purity requirements is well known. In its basic form, a reverse osmosis based system uses a pump to create feed water flow into the reverse osmosis membrane assembly. The feed water passes along one side of the membrane until it meets a restriction on the outlet. The restriction causes a driving pressure that forces some of the feed water to pass through the membrane. Essentially the membrane characteristics allows only water to pass through the membrane, rejecting dissolved solids and large molecules including micro-organisms in the remaining water (reject water). The water allowed to pass through the reverse osmosis membrane is collected (product water) and the reject water is dumped or discarded. The product water is in a purified state according to the reverse osmosis membrane rejection characteristics whilst the rejected water contains the impurities (at a higher concentration compared to the original feed water). The pressure difference across the feed/ reject side to the product water is termed the Trans Membrane Pressure (TMP). Impurity concentration in the reject stream is limited to prevent precipitation of dissolved solids and scaling of the membrane and a minimum cross-flow velocity is necessary to assist with self-cleaning of the membrane surface. These parameters dictate the flow rates and pressures required.

Presently reverse osmosis based devices for producing microbiological pure water require control of pump speed and/ or the reject water outlet restriction size to control TMP and flow rates. Most reverse osmosis based devices are of fixed capacity and dump or discard the entire reject water to a drain system. Some reverse osmosis based devices may incorporate a reject recycle, where a fixed percentage of the reject will be injected back into the feed to reduce feed water wastage whilst maintaining sufficient cross-flow velocity.

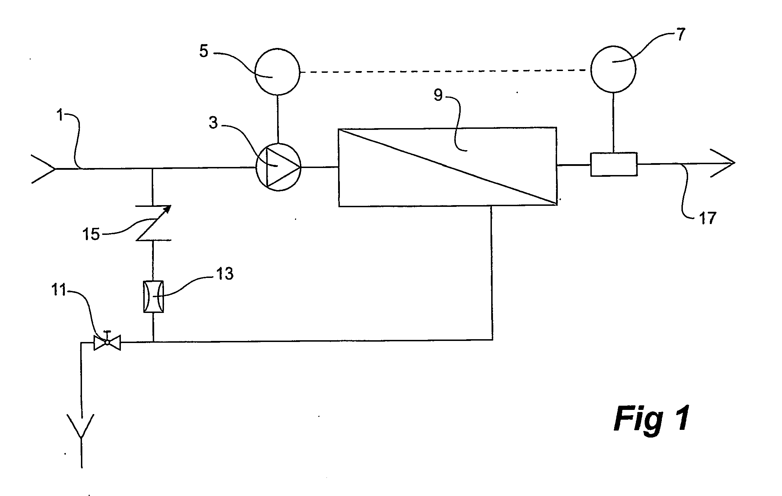

Figure 1 is background art illustrating a basic system incorporating a reject recycle. Figure 1 is based upon a reverse osmosis filtration system. Additional sensors necessary to set up the system have been omitted for simplicity. Feed water (often pre-treated mains pressure water) 1, is fed to the high pressure feed pump 3, which is driven by a variable frequency controlled motor 5. The input to the variable frequency controlled motor is via the flow transmitter 7, which measures the product water flow rate from the reverse osmosis membrane 9. The motor and pump speed up or slow down to maintain the required production rate. The reject back pressure is set using a restriction, in this example a globe valve for reject control 11. A flow controller 13, and a non-return valve 15, allow for a fixed quantity of reject to be recycled into the feed stream. Supply of purified water is by a purified water supply line 17.

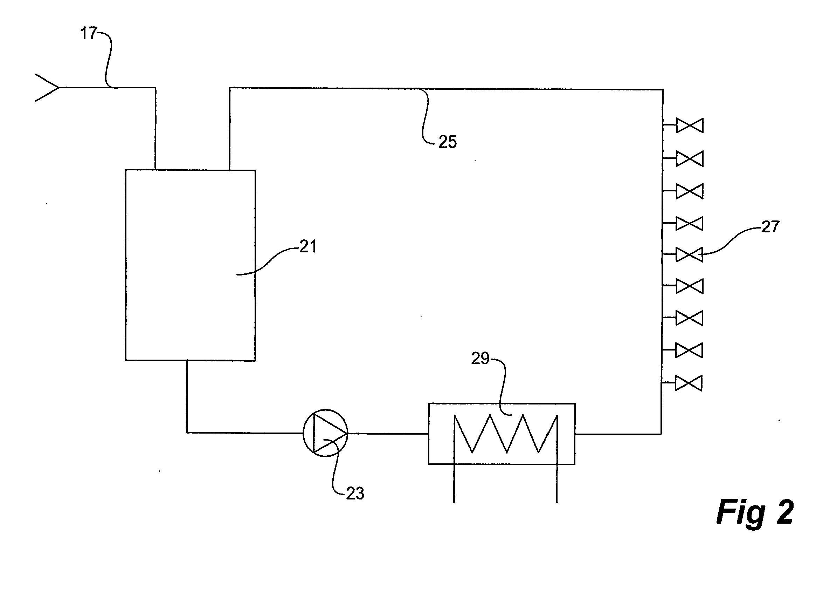

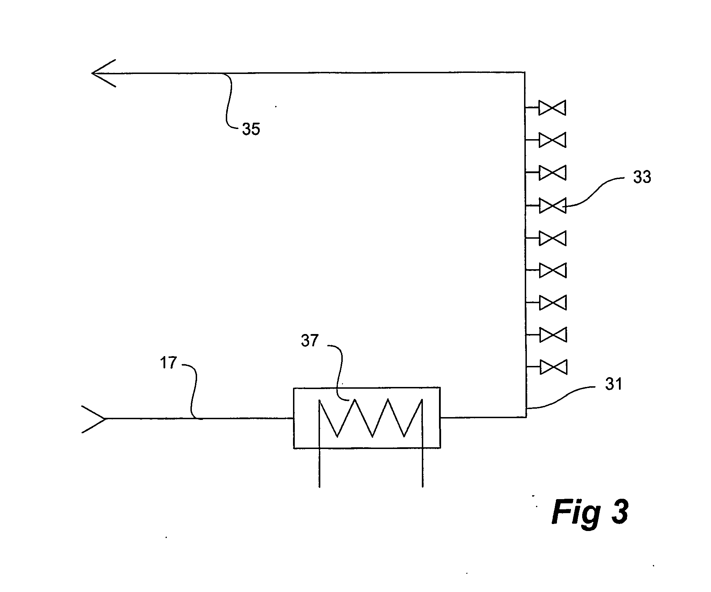

The product water in the background art reverse osmosis based device as shown in Figure 1 may be distributed by two alternative methods. A first method, as shown in Figure 2, illustrates a separate storage tank 21 supplied by the purified water supply line 17, separate loop recirculation pump 23, and recirculation loop 25 with usage take-off points 27. A heating element or heat exchanger 29 can be included in the recirculation loop for a heat disinfection process. A second method, as shown in Figure 3, illustrates a recirculating product water supply where product water flows around a recirculation loop 31 with usage take-off points 33, with the residual product water being returned to the feed by the high pressure feed pump 3 of Figure 1 via line 35.

In order to inhibit bio-film formation on internal hydraulic surfaces, a well known practice in the art is to ensure fluid is continuously circulated at velocities exceeding a minimum of 1 metre per second.

Another well known practice in the art to maintain system microbiological purity is to apply a periodic disinfection process to a device system followed by dumping and flushing the waste products created during the said disinfection process to a drain. A commonly used disinfection process used in water purification systems capable of meeting microbiological purity requirements applies heating of the water in the water purification system to a set temperature that is held and recirculated at that temperature for a set duration. A well known setting for temperature and duration for such applications is 80 degrees Celsius held for a minimum of 10 minutes. Graphs based on empirical data have been published that plot equivalent anti-microbiological effectiveness for other temperatures and durations, for example 90 degrees Celsius for 1 minute or 70 degrees Celsius for 100 minutes. Ultimately the individual system disinfection temperature and hold duration is set according to commissioning and ongoing in-service microbiological sampling and analysis.

Both the devices represented by Figure 2 and Figure 3 can employ the principle of continuous circulation and periodic heat disinfection to some degree to maintain product water biological purity. However, the devices represented by Figure 2 and Figure 3 have shortcomings that the present invention overcomes. The device of Figure 2 uses a storage tank 21 to provide a reserve of purified water in times of high demand based on a reverse osmosis purification system of fixed production capacity. The argument used in this configuration is that the reverse osmosis system can be sized to suit normal demands and accommodate infrequent high demand periods, thereby reducing the capital cost associated with over-sizing the system. The device of Figure 2 also allows the reverse osmosis system to remain idle for predefined periods (such devices often incorporate periodic reverse osmosis flush cycles to prevent stagnation in the reverse osmosis membrane assemblies). However, the problem with this system is there is no heat disinfection upstream of the reverse osmosis membranes unless some heated product water is routed upstream of the reverse osmosis membranes by the use of valving and additional piping for this purpose during the disinfection process. This may introduce additional disinfection problems. Another drawback of this system is that the storage tank will not be exposed to the fluid velocities required to inhibit bio-film formation, may have stagnant regions and will rely heavily on the heat disinfection process and dumping of post heat disinfected water to maintain microbiological purity. The requirement to heat the additional volume of product water in the tank will also consume more energy than a tankless system. A tank also has problems with changing air space within the tank with the requirement of filtering air coming into the tank. It is difficult, too, to make a system which is readily portable and able to operate in any orientation.

The shortcomings of the device represented in Figure 3 include that the device cannot be heat disinfected as a closed loop (for example when connected to the device of Figure 1) due to pressure build up. Additionally when combined with the device of Figure 1 the device does not control the mixed water composition (feed water, permeate recycle and reject water recycle) to maintain permeate water quality and minimise reject water dumped to drain.

A device described in U.S. Pat No 6,908,546 applies the principles of continuous circulation at velocities exceeding 1 metre per second combined with a chemical sanitization process applied when the device is not supplying purified water. The device requires the use of a double pass RO membrane assembly for producing purified water having microbiological purity. The main feature of the device is based upon the control of the recirculating water acidity. During non-demand of product water at the usage points the product water and a percentage of the reject water is allowed to recirculate and increase in acidity through the increase of carbon dioxide concentration as a result of the RO process. The piping, including the product water recirculation loop, is designed to operate under pressure to maintain carbon dioxide in solution and hence the product water acidity. The device process is essentially controlled using conductivity and flow sensors on the purified product water recirculation loop. A claimed advantage of the device described in U.S. Pat No 6,908,546 B2 is that the device "...produces water of high microbiological purity without the infrastructure associated with hot water sanitization and ozone sanitization.". Whilst the device described in U.S. Pat No 6,908,546 B2 overcomes much of the shortcomings of the devices of FIG 2 and FIG 3 it requires an element of continuous reject water dumping to operate and is applied to double pass RO configurations.

DE3106772 discloses a membrane separation process for separating off dissolved higher molecular and low molecular substances, in particular ions, from raw water using the principle of reverse osmosis. EP0599281 also discloses a process and apparatus for treating liquid by reverse osmosis which process is continuous and open to remote-controlled adjustment. This serves to optimise the yield and the care of the membrane module.

### SUMMARY OF THE INVENTION

The object of the invention is to produce and distribute water of microbiological quality. A key parameter affecting the object is the maintenance of device microbiological cleanliness. The invention applies a combination of principles to overcome the shortcomings of the devices described above and provides at least an alternative method to the other devices that may achieve similar outcomes.

In one form according to claim 1 the invention is said to reside in a closed loop water purification system comprising:
a feed water line to supply feed water at a selected pressure;
a high pressure feed pump;
a filter assembly having an inlet supplied by the high pressure pump;
a distribution line for supplying a plurality of purified water take off points and returning to a junction in the feed water line upstream of the high pressure feed pump;
a reject water line for returning reject water from the filter assembly to the fed water line and connected to the junction in the feed water line upstream of the high pressure feed pump;
a first backflow prevention device on the feed water line upstream of the junction;
a second backflow prevention device on the distribution line upstream of the junction;
a third backflow prevention device on the reject water line upstream of the junction; and
a heater system in one of the supply lines, the reject line or the feed water line.

In one form of the invention the filter assembly is a reverse osmosis filter assembly. Alternatively the filter assembly is a nano-filtration filter assembly, an ultrafiltration assembly, a micro-filtration assembly or a combination of any of the above.

Preferably, there is further included a dynamic reject water restriction on the reject water line to drain, the reject water restriction being controlled by a sensor arrangement. The sensor arrangement may be a mixed water conductivity sensor located on the feed water line downstream of the junction or alternatively it may be flow measurement sensors on one or more of the feed water line, the reject water line or the distribution line upstream of the junction.

Preferably, there is further included a flow controller and backflow prevention device in the distribution line for correct flow direction and to provide a percentage of purified water recirculation in the distribution system.

Preferably, there is further included a pressure relief valve in the distribution line to allow for expansion during heat disinfection.

In one embodiment the filter assembly is a single pass filter. In an alternative embodiment the filter assembly is a double pass filter. The double pass filter can be operated in either a parallel or a serial mode.

There can be further included a permeate distribution loop sub-system.

The permeate distribution loop sub-system can comprise a flow line between the distribution line downstream of the take off points and the distribution line upstream of the take off points and a loop recirculating pump to allow for recycle of purified water in the distribution loop sub-system.

The permeate distribution loop sub-system can further comprise a supplementary heater.

In an alternative form the invention comprises a closed loop water purification system including a feed line feeding a filtration unit, a supply line from the filtration unit and a reject water line from the filtration unit, excess water from the supply line and the reject line feeding back to a return junction in the feed line with backflow prevention devices on the supply line and the reject water line upstream of the return junction with the feed line and a backflow prevention device on the feed line upstream of the return junction.

In an alternative form the system is said to reside in a closed circuit liquid filtration system including a constant pressure liquid supply, the constant pressure liquid supply including a non-return valve.

The closed circuit liquid filtration system may include a disinfection arrangement.

The closed circuit liquid filtration system may include a reverse osmosis filter assembly, a nano-filtration filter assembly, an ultrafiltration assembly or a combination of any of the above.

By the supply of feed water at a selected or constant pressure through a non-return valve to the filtration circuit, proper hydraulic balance is maintained in the circuit during disinfection. If there was not a supply of feed water during the disinfection then any loss of pressure such as by a leaking seal or valve would result in a loss of suction pressure to the pressurising pump causing cavitation.

Hence it will be seen that the invention provides a system which produces and distributes purified water of microbiological quality to points of usage on demand using single or double pass reverse osmosis configurations without the use of a storage tank. The invention uses a combination of water recirculation and re-purification, flow velocity and periodic full system heat disinfection to maintain the microbiological cleanliness of the system. The invention provides a device which can reduce water wastage during these processes by controlling reject recycle by sensing one or more parameters such as mixed water conductivity.

### BRIEF DESCRIPTION OF THE DRAWINGS

To assist with understanding of the invention reference will now be made to the accompanying drawings which show the prior art devices and preferred embodiments of the invention.

In the Drawings:
Figure 1 is a schematic illustration of a basic background art reverse osmosis membrane based water purification process incorporating a fixed rate reject water recycle as discussed in the Background section;
Figure 2 is a schematic illustration of a prior art purified product water storage tank with a distribution loop, usage take-off points and recirculation pump as discussed in the Background section. The input to this sub-system is the product water output from Figure 1;
Figure 3 is a schematic illustration of a prior art distribution loop with usage take-off points, without a storage tank and designed for recycling excess purified product water back to the reverse osmosis feedwater input as discussed in the Background section. In this case the input to this sub-system is from the purified product output of Figure 1 and the output of this sub-system is fed back into the feed side of Figure 1;
Figure 4 is a schematic illustration of a water purification, distribution and heat disinfection system according to one embodiment of the invention based on a single pass reverse osmosis configuration;
Figure 5 is a more detailed view of the schematic system shown in Figure 4 and showing control lines and reject lines;
Figure 6 is an alternative embodiment of the schematic system shown in Figure 4 incorporating a permeate distribution loop sub-system;
Figure 7 is a schematic view of an alternative embodiment of the invention based on a double pass reverse osmosis configuration;
Figure 8 shows an alternative embodiment of the invention for a single user water purification unit suitable for instance for a renal dialysis unit; and
Figure 9 shows an alternative embodiment of the invention for a multi user water purification unit suitable for a large hospital.

### DESCRIPTION OF PREFERRED EMBODIMENTS OF THE INVENTION

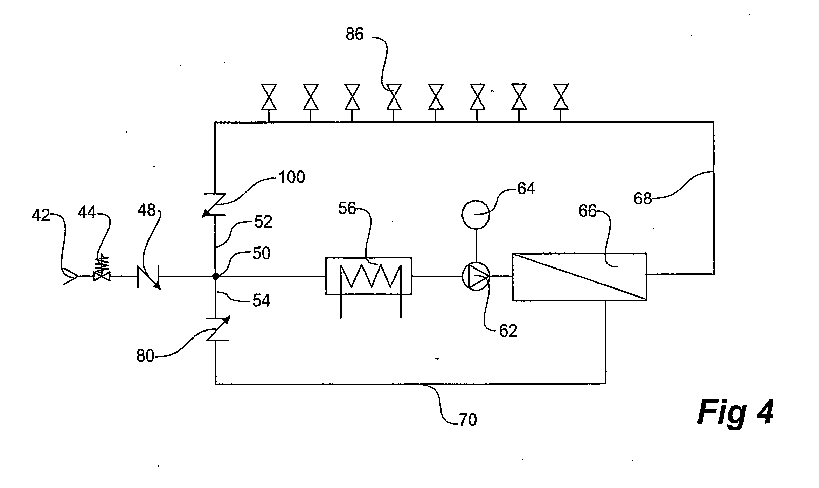

The reverse osmosis filtration unit shown in Figure 4 is a closed loop filtration and supply unit according to one embodiment of the invention.

Feed water that has been pre-treated to meet the feed water requirements for reverse osmosis purification is provided to the invention at inlet 42. The feed water passes through a pressure regulator, 44 and a non return valve or backflow prevention device 48 to junction 50. The junction 50 connects the feed water with a purified product water recycle input 52 and reject water recycle input 54, mixing with the feed water. The mixed water passes a heating device 56 before passing to high pressure feed pump 62 driven by a variable frequency controlled motor 64 that provides the required flow rate.

The mixed water is pumped by pump 62 into an reverse osmosis membrane bank 66. The reverse osmosis membranes will be of the type suitable for heat disinfection. Reverse osmosis reject water line 70 passes to a backflow prevention device 80 before injection back into the feed water stream via the reject water recycle input 54. Optionally there is a reject water bleed off from the reject water line 70.

The purified water output 68 from the reverse osmosis membranes 66 flows via a distribution loop to the usage take-off points 86 for use as required. The balance of purified water passes a backflow prevention device 100 before being injected back into the feed water stream via the purified product water recycle input 52.

When the system is being used to supply purified water there is a continuous supply of fresh water to make up for used water. During the purification/ disinfection cycle expansion of the water during heating is allowed for by a pressure relief valve (not shown in Figure 4). The system also allows for any leak in the system by allowing for supply of fresh make up water at essentially constant pressure via valve 44 and backflow prevention device 48. This is a significant advantage over prior arrangements in which loss of water from the system downstream of the backflow prevention device 48 would lead to cavitation of the pressurising pump 62 and consequent failure.

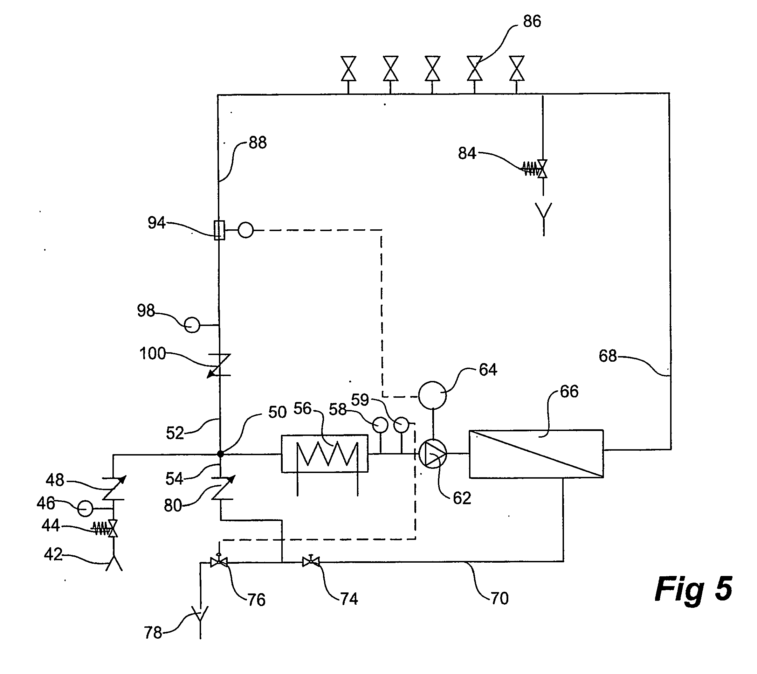

Referring to the drawing in Figure 5, the invention according to the embodiment of Figure 4 will be described in detail. Common items are given the same reference numerals. The invention uses a Programmable Logic Controller (PLC) and/ or a Printed Circuit Board (PCB) for control. The PLC/PCB is not shown in Figure 5, but takes the signals from the various sensor/transmitters described in the invention to control various apparatus as described in order to operate.

Feed water that has been pre-treated to meet the feed water requirements for reverse osmosis purification is provided to the invention at inlet 42. Pre-treatment of feed water is outside the scope of this invention as it is dependent upon the raw feed water characteristics. Typically the raw feed water will be town mains water supply and pre-treatment may include a softener to reduce the hardness of the water going to the reverse osmosis membranes, carbon filters to remove chlorine and cartridge filters to remove particulates. The pre-treatment will be dictated by the raw feed water characteristics and the reverse osmosis membrane manufacturers feed water specifications. For example, Thin Film Composite (TFC) membranes are chlorine intolerant compared to Cellulose-Acetate (CA) membranes.

The feed water under mains or pre-treatment pumping pressure passes through a pressure regulator 44. The pressure regulator isolates the invention's internal process from external pressure fluctuations to provide stability in the invention's control of other feed inputs from purified water and reject water recycle.

A conductivity sensor/ transmitter 46, monitors the feed water conductivity for PLC reference. The feed water passes a backflow prevention device or non-return valve 48. This backflow prevention device 48 is also used to isolate the closed loop system of the present invention (in the reverse direction). The feed water passes a piping junction 50 for purified product water recycle input 52 and reject water recycle input 54, mixing with the feed water in proportions according to the PLC control method. The mixed water passes a heating device, 56 controlled by a temperature sensor/ transmitter 58. Typically the heating device could be a heating element or heat exchanger.

The mixed water passes a conductivity sensor/transmitter 59, that monitors the mixed water conductivity of the water that enters the inlet suction of the high pressure feed pump 62. The high pressure feed pump is driven by a variable frequency controlled motor 64 that provides the required flow rate according to control requirements. The mixed water is pumped into a reverse osmosis membrane bank 66. The reverse osmosis membrane bank will consist of a number of reverse osmosis membrane and pressure vessel assemblies connected in series according to system design requirements. The reverse osmosis membranes will be of the type suitable for heat disinfection.

The reverse osmosis reject water line 70 passes through a static reject restriction 74 that sets the baseline reverse osmosis reject outlet pressure and flow conditions. The reject water passes towards a dynamic reject control 76. The dynamic reject control allows some, none or all of the reject water to flow to drain 78 according to control conditions. The residual reject water flows via backflow prevention device 80 for injection back into the feed water stream via the reject water recycle input 54 to junction 50.

The purified water from the reverse osmosis membranes enters the distribution loop 68. A pressure relief 84 in the distribution loop 68 is required to accommodate any fluid expansion during heat disinfection and subsequent pressure increase. The distribution loop is routed to the usage take-off points 86 to eliminate stagnant distribution legs. After the possible usage of some of the purified water at 86, the residual purified water continues in the return leg 88 of the distribution loop. The balance of purified water passes flow sensor/transmitter 94 used to control motor 64 before passing conductivity sensor/transmitter 98, and a final backflow prevention device 100 before being injected back into the feed water stream via the purified product water recycle input 52 to junction 50.

Optionally any of the back flow prevention devices may be pre-loaded to provide a back pressure in the respective lines before flow in the required direction through the back flow prevention devices will occur.

It can be seen in Figure 5 that the control of the system relies on two fundamental elements, mixed water conductivity measured at 59 that controls dynamic reject control 76, and purified water recycle flow rate measured by flow sensor/transmitter 94 that controls the high pressure feed pump 62 via variable frequency controlled motor 64. The conductivity measurements at conductivity sensor/transmitter 46 and conductivity sensor/transmitter 98 provide additional reference values for making adjustments to the mixed water conductivity requirement and for out of specification alarm purposes, but are not essential to the invention. Other sensors/transmitters can be added around the invention such as pressure sensors/transmitters for additional monitoring and information and safeguards.

Alternatively the various controllers can be omitted to provide a simple system which will operate in the absence of control.

During normal operation it can be seen that the invention accommodates variations in demand at the points of use 86 up to maximum capacity. Recycle flow rates can be set to above those required to inhibit bio-film formation under all modes of operation or for specific modes for example, during no permeate draw off periods. The mixed water conductivity control function controls the wastage of water to drain in the reject stream by adjusting the dynamic reject control 76.

When there is no demand at the points of use 86, dynamic reject control 76 can completely shut off creating a closed purified and reject water recirculation cycle to inhibit bio-film formation without the unnecessary wastage of water in the reject stream to drain.

Periodic heat disinfection can be programmed into the PLC of the invention to occur at periods of non-demand. For example, during the night time in the case of a system supplying a dialysis clinic. The invention closes the dynamic reject control 76 to create a closed system and the water throughout the system including the reverse osmosis membranes is heated by use of heater 56 in a controlled manner according to monitoring by the temperature sensor/transmitter 58. Water is recirculated and recycled throughout the paths at a final set temperature and duration. At the end of the heat disinfection cycle, the dynamic reject control at 76 is opened in a controlled manner to dump heated water and introduce cold water to cool the system via inlet 42 and dump the by-products of heat disinfection such as dead micro-organisms and endotoxins.

As discussed in background, heat disinfection temperatures and durations will be set according to commissioning and ongoing water quality analysis. It is well known in the art that, for example, dialysis clinics require ongoing water microbiological quality monitoring and that feed water quality will affect the amount and rate of microbiological growth possible in water purification systems. Initially the settings for the heat disinfection may be on the conservative side, for example, every night at 80 degrees Celsius for 1 hour, however, with ongoing water microbiological quality monitoring, this may be reduced to, for example, 65 degrees Celsius for 1 hour every second night.

Furthermore, ongoing water microbiological quality monitoring may allow the programming of the invention's PLC to incorporate idle periods of non-operation such that recirculation and recycling during non-demand periods occurs for 1 hour every two hours.

The flexibility in the programming of the invention's operational cycles provides additional benefits to reduce energy and water consumption.

Additional equipment may be added to the device of the invention to accommodate specific application requirements without affecting the invention's basic concept. For example, a booster pump may be added into the purified water supply line 68 to accommodate loops that have increased head such as that which would occur in a purified water distribution loop traversing a multi-story building or long purified water distribution loops.

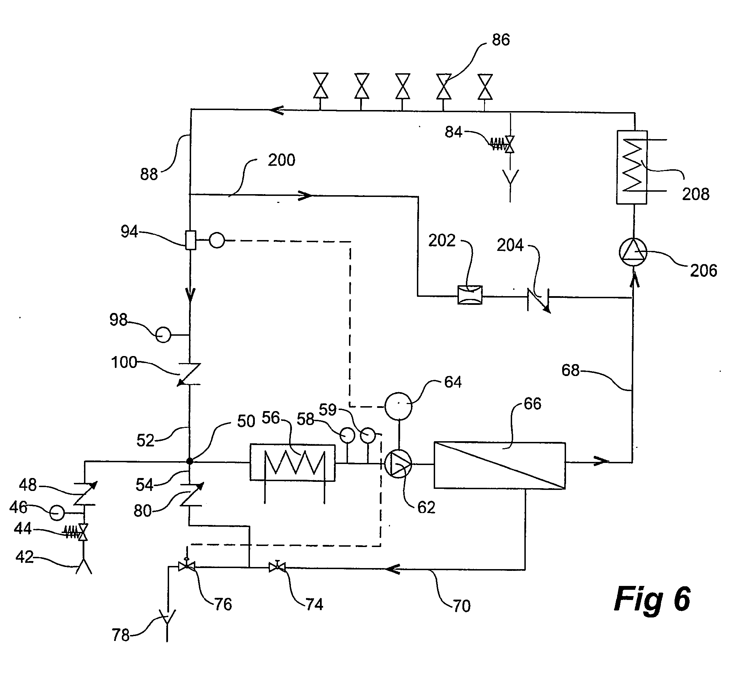

Figure 6 shows an alternative embodiment of the schematic system shown in Figure 4 incorporating a permeate distribution loop sub-system. In this embodiment those items corresponding to items in the embodiment shown in Figure 5 are given the same reference numerals.

The embodiment shown in Figure 6 incorporates a permeate distribution loop sub-system. The permeate distribution loop sub-system comprises a flow line 200 extending from the return leg 88 of the distribution loop to the distribution loop 68. The flow line 200 includes a flow controller 202 and a non -return valve 204. The permeate distribution loop sub-system includes a pump 206 and a supplementary heater 208. The supplementary heater is used during periodic thermal disinfection to ensure thorough disinfection throughout the distribution loop.

By this arrangement the permeate distribution loop sub-system can be used to maintain a high flow rate of purified water in the permeate distribution loop sub-system to inhibit bio-film formation during times, for instance, of low draw off via the points of use 86 thereby reducing the flow rate through the reverse osmosis unit 66 at those times.

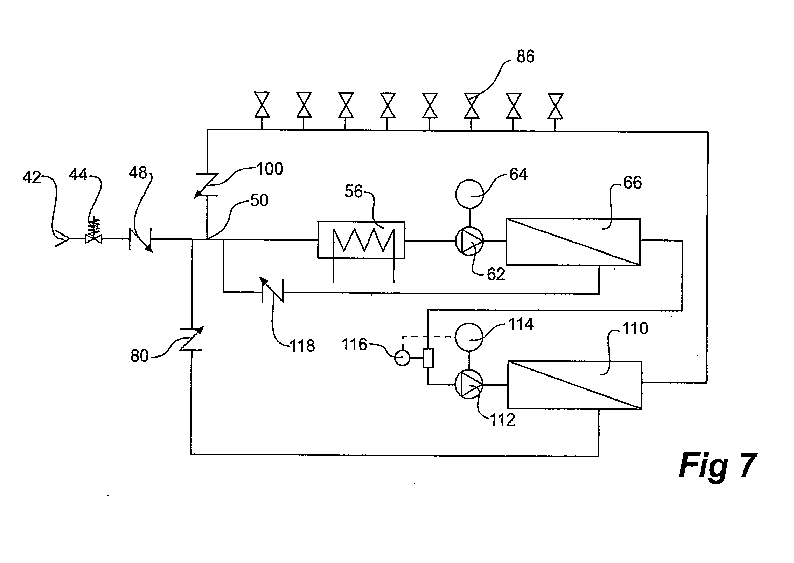

Figure 7 is provided to schematically illustrate the application of the invention incorporating a double pass reverse osmosis configuration. It can be seen that the layout is almost identical to that of Figures 4 and 5 with the exception that the purified water from the first pass reverse osmosis membranes 66 is diverted to the feed of the second reverse osmosis membranes 110. In this case it may be necessary to boost the feed pressure to the second reverse osmosis membranes 110 using a second high pressure feed pump 112 driven by motor 114 and controlled by a number of possible techniques such as by pressure sensor/transmitter 116. The reject water from the first reverse osmosis membranes 66 is recycled via backflow prevention device 118. Reject water from the second reverse osmosis membranes 110 is recycled via backflow prevention device 80.

Although Figure 7 has been drawn as a series configuration of reverse osmosis membranes it may alternatively be constructed as a parallel configuration or a dual configuration which could be operated in series or parallel configuration or as one or the other singly.

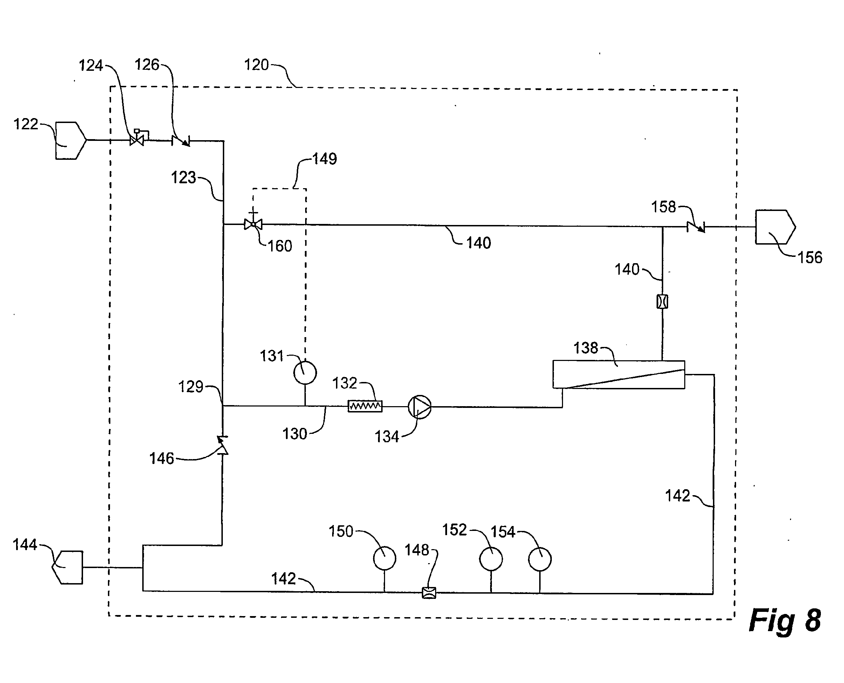

Figure 8 shows an alternative embodiment of the invention for a single user water purification unit suitable for instance for a renal dialysis unit.

The water purification unit 120 has a feed water supply 122 with a pressure regulator 124 and a non-return valve 126 to feed water line 123 which extends to junction 129. Feed water in line 130 is passes through disinfection heater 132 which is used during disinfection cycles as discussed below. Feed water then enters high pressure pump 134 where it is raised to the pressure necessary for the reverse osmosis unit 138. A retentate line 140 and permeate line 142 extend from the reverse osmosis unit 138.

The permeate line 142 extends to a permeate take off 144 with the balance of unused water returning via non-return valves 146 to junction 129. The permeate line includes a flow control valve 148 and pressure 150, temperature 152 and conductivity sensors 154.

The reject line 140 has a reject water drain 156 with a non-return valve 158. Non-return valve 158 is of the pre-loaded type, opening at a selected design pressure. The reject line140 extends via a valve 160 to the feed line 123 to complete the closed circuit of the present invention.

In a normal use cycle the pump 134 operates to recycle water from the junction 129 through the reverse osmosis unit 138 and through either or both the reject line 140 back to the junction 129 and the permeate line 142 back to the junction. As permeate is extracted through the permeate take off 144 fresh water is supplied through inlet 122 to make up the volume.

When salt build up is detected either by mixed ware conductivity sensor 131 on the feed water line 130 or in the permeate line 142 by conductivity sensor 154 then the valve 160 is closed via control line 149 and water is rejected to drain through reject water drain 156.

For the periodic thermal disinfection cycle the heater 132 is activated while maintaining flow rate around the system. The thermal disinfection cycle is done when permeate is not being drawn off. Thermal expansion of the water in the closed cycle is allowed for by allow excess water to flow to drain in the reject water line via non-return valve 158.

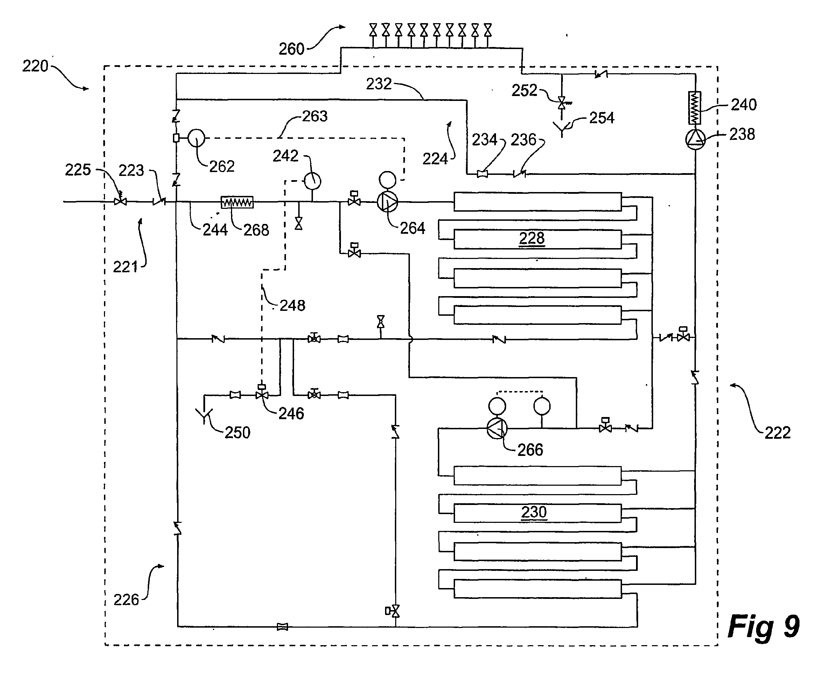

Figure 9 shows an alternative embodiment of the invention for a multi user water purification unit suitable for a large hospital.

The water purification unit 220 includes a supply section 221, a reverse osmosis or other type of filtration section 222, a permeate loop 224 and a retentate loop 226.

The supply section 221 includes a non-return valve 223 and inlet pressure regulator 225.

The reverse osmosis or other filtration section 222 has two reverse osmosis or other filtration sections 228 and 230 which can by operation of valves be run as parallel, serial or individual systems. Each filtration section can be single or multiple filtration units depending upon the total water supply required for a particular situation. In this embodiment there are four reverse osmosis units in each filtration section. The permeate from each reverse osmosis unit is collected and the retentate is passed to the next reverse osmosis unit.

The permeate loop 224 includes a permeate recycle sub-loop 232 which includes a flow controller 234 to ensure that of all the water flowing in the permeate loop only a portion will recycle through the sub-loop and a portion will recycle through the filtration section 222. The permeate recycle sub-loop 232 also includes a back flow prevention valve 236. The permeate recycle sub-loop 232 also includes a loop recirculating pump 238 and a supplementary heater 240. The loop recirculating pump 238 and the supplementary heater ensure that a very long permeate loop such as may be found in a large ward is thoroughly disinfected as is required during the regular disinfection cycle and that flow rates and pressures required by take off points 260 and loop velocities are satisfied.

The permeate recycle flow rate downstream of the take off points 260 is measured by a permeate recycle flow meter 262 which controls the main high pressure feed pump 264 via control line 263. A second high pressure feed pump 266 is used a as a pressure booster when the filtration units 228 and 230 are operating in serial mode and as a first pass high pressure pump in when the filtration units 228 and 230 are operating in parallel mode or individual mode.

The mixed water conductivity sensor 242 in the feed supply line 244 of the filtration section measures the conductivity of the water after it has mixed from the feed, the permeate recycle and the reject recycle and when the conductivity of the mixed water reaches a set value indicating build up of salts then the bleed control valve 246 is operated by control line 248 to dump water to waste 250.

Thermal disinfection is done by means of main heater 268 in the feed supply line 244 in the filtration system as well as the supplementary heater 240 in the permeate loop 224. Pressure build up in the system as a whole during thermal disinfection is relieved via pressure relief valve 252 to waste 254.

The control philosophy of the system of this embodiment of the invention is as follows:

The system generally operates as two sub-systems, an filtration sub-system and a permeate distribution loop sub-system with the common connection being permeate recycle. During normal usage such as daily dialysis treatments the system runs fully automatically and is controlled by two main parameters, the mixed water conductivity (MWC) via conductivity meter 242 and permeate recycle flow rate (PRF) via flow meter 262.

In one embodiment the permeate recycle flow rate (PRF) set-point can be fixed at a nominal 200 L/hr (3.33 L/min). As permeate is drawn from the distribution loop, the filtration sub-system is required to produce more permeate to maintain the PRF set-point. As the PRF falls due to permeate draw from the loop, the main high pressure feed pump 264 will ramp up to keep the flow rate at the PRF control set-point. Conversely, as draw-off from the loop decreases the main high pressure feed pump 264 will ramp down to maintain the flow rate at the PRF control set-point. The second high pressure feed pump 266 is used as a pressure booster in serial mode and as a first pass high pressure pump in parallel mode.

As permeate is drawn off from the loop the feed water to the filtration sub-system comprising a mixture of pre-treated inlet feed water, permeate recycle (at 200 L/hr) and reject recycle will increase in total dissolved solids (TDS) concentration, that is, mixed water conductivity (MWC) will increase. To maintain the MWC set-point the bleed control valve 246 (BCV) opens to dump the required quantity of reject to re-establish the MWC set-point.

The MWC is set to a percentage of the pre-filtered inlet feed water conductivity. If MWC is set at 100% then simply the system will recycle 200 L/hr of permeate and the balance of reject according to the system recovery when there is no permeate draw off. Under the same no permeate draw off' condition, if the MWC is set to 90% the system will dump reject until the MWC condition is satisfied and then recycle 200 L/hr of permeate and the balance of reject of the captured volume (the system is essentially a closed loop).

As the BCV is an on/ off, open/closed valve, a "MWC delta" is used to provide an open and closed duration to avoid continual opening and closing of the valve around set-point. Once MWC is exceeded, the BCV opens until the MWC drops below the MWC set-point by the MWC delta before the valve closes. Dropping below the MWC set-point by the MWC delta also provides a duration before which the MWC is next exceeded.

The purpose of the heat disinfection (HDIS) cycle is to destroy microbiological growth that may have occurred during normal service and pre-treatment maintenance modes throughout the filtration and permeate distribution loop sub-systems and to discard any waste products as a result of the HDIS process before resuming normal service mode and production of permeate for dialysis treatment.

The default settings for the HDIS cycle comprise a daily HDIS interval (timed to occur when no dialysis treatment is being conducted such as the middle of the night or early morning) where the system is brought up to 80 deg C and held at this temperature for 30 minutes. At these default settings, levels of microbiological matter and waste product (endotoxins as a result of HDIS microbiological destruction) that could result in patient reactions are prevented.

The HDIS settings are adjustable. For example, a HDIS cycle of 100 minutes hold duration at 70 deg C every three days may be sufficient subject to rigorous microbiological analysis under supervision and direction of the supervising physician. The reduction of HDIS cycle frequency would extend the life of the membranes. However, the default settings provide a conservative baseline.

The HDIS process also provides a secondary function of cleaning the heat sanitizable reverse osmosis (HSRO) membranes of organic fouling and scaling.

The HDIS cycle will normally follow any pre-treatment maintenance cycles to ensure that any pre-treatment contaminants that have inadvertently entered the RO feed water are also sanitised and discarded during the HDIS cycle.

The permeate sub-loop heater 240 is only activated during the heat disinfection cycle.

The filtration system heater 268 is only activated during the heat disinfection cycle.

The system also includes a MWC set-point override should the permeate conductivity measured at other points in the flow lines exceed permeate conductivity requirements. In this case the MWC set-point is adjusted down 10% incrementally until the permeate conductivity requirement has been restored. A MWC bottom limit of two increments is set after which no further adjustment can be made and a high permeate conductivity warning is triggered.

During'no permeate draw off' condition (i.e., when MWC hasn't changed for 10 minutes) the filtration system can be considered to be in an idling mode where the high pressure pumps operate at the minimum flow rate. Power consumption is at a minimum where the main power consumed is by the continuous operation of the distribution loop recirculation pump.

An automatic temperature dump mode is incorporated in a service mode to reduce elevated temperature within the system. The temperature dump mode will be activated upon the system exceeding the control set-point detected at various points in the flow lines. In this case the MWC control will be overridden and the BCV opened to dump reject until the incoming water has reduced the system temperature to the set-point.

Typical operating parameters of a system according to this embodiment of the invention are as follows:
**Nominal Plant Capacity** (Permeate Output): 12 Litres/minute
**Operating Conditions** (Typical, Adelaide, South Australia):
   Ambient Temperature: 15 - 20 deg C
   Feed Water: Adelaide Mains (750 µS/cm), 15 -18 deg C, softened to 550 µS/cm, chlorine removed (refer pre-treatment)
   Pre-treatment comprising softener cartridge, activated carbon and 0.1 µm wound filter in series

**Double Pass Configuration (RO#1and RO#2 in series) Operating Parameters:**

| **OPERATING AT MAXIMUM OUTPUT/PERMEATE DRAW-OFF** | |
|---|---|
| **Flow Rates** | **L/min** |
| Operating at maximum output -permeate draw-off | 12 |
| Reject Bleed Control Valve fully open - reject to drain | 3.5 |
| Feed Flow =12 + 3.5 | 15.5 |
| | |

| **Pressures** | **KPa** |
|---|---|
| Feed Water | 112 |
| Feed HP pump discharge | 930 |
| RO#1 Reject | 904 |
| RO#2 HP Pump suction | 50 |
| RO#2 Feed HP pump discharge | 760 |
| Loop Boost/Circulation Pump inlet | 116 |
| Loop Boost/ Circulation Pump discharge (measured w/ gauge) | 650 |

| **Conductivities** | **µS/cm** |
|---|---|
| Feed Water | 554 |
| Mixed Water | 854 |
| Permeate | 4.0 |

| **OPERATING AT NO PERMEATE DRAW-OFF** | |
|---|---|
| **Flow Rates** | **L/min** |
| No permeate draw-off & stabilising (approximately 30 minutes later) | |
| Operating at maximum output (permeate draw-off) | - |
| Reject Bleed Control Valve fully open (reject to drain) | - |
| Feed Flow | - |
| | |

| Pressures - note that pressure recorded before BCV shut | KPa |
|---|---|
| Feed Water | 267 |
| RO#1 Feed HP pump discharge | 330 |
| RO#1 Reject | 305 |
| RO#2 HP Pump suction | 48 |
| RO#2 Feed/RO#2 HP pump discharge | 397 |
| Loop Boost/Circulation Pump inlet | 240 |
| Loop Boost/Circulation Pump discharge (measured w/gauge) | 650 |
| | |

| Conductivities after closing permeate draw-off (no permeate draw-off) & stabilising (approximately 30 minutes later) with BCV shut. | µS/cm |
|---|---|
| Feed Water | 553 |
| Mixed Water | 158 |
| Permeate | 3.0 |

Throughout this specification and the claims that follow unless the context requires otherwise, the words 'comprise' and 'include' and variations such as 'comprising' and 'including' will be understood to imply the inclusion of a stated integer or group of integers but not the exclusion of any other integer or group of integers.

## Claims

1. A water purification system comprising:
a feed water line to supply feed water,
a high pressure feed pump (62),
a filter assembly having an inlet (42) supplied by the high pressure feed pump (62) a distribution line (68) and a reject water line (70),
**characterized by** the reject line returning reject water from the filter assembly to the feed water line to a junction (50) in the feed water line upstream of the high pressure feed pump, the distribution line supplying at least one purified water take off point (86) and returning to the junction (50) in the feed water line upstream of the high pressure feed pump (62) thereby forming a closed loop system,
a first backflow prevention device (48) on the feed water line upstream of the junction (50)
a second backflow prevention device (100) on the distribution line upstream of the junction (50)
a third backflow prevention device (80) on the reject water line upstream of the junction (50), and
a heater system (56) in one of the distribution line, the reject line or the feed water line.

2. A closed loop water purification system as in Claim 1 wherein the filter assembly is a reverse osmosis filter assembly, or is selected from the group comprising a nano-filtration assembly, an ultrafiltration assembly, a micro-filtration assembly or a combination thereof.

3. A closed loop water purification system as in Claim 1 further including a dynamic reject water restriction (76) on the reject water line to drain reject water to a drain (78) the reject water restriction being controlled by a sensor arrangement (59).

4. A closed loop water purification system as in Claim 3 wherein the sensor arrangement is selected from the group comprising a mixed water conductivity sensor located on the feed water line downstream of the junction, a flow measurement sensor on the feed water line, or a combination of flow measurement sensors on the feed water line, the reject water line and the distribution line upstream of the junction.

5. A closed loop water purification system as in Claim 1 further including a flow controller (94) and backflow prevention device in the distribution line for correct flow direction and to provide a percentage of purified water recirculation in the distribution system.

6. A closed loop water purification system as in Claim 1 further including a pressure relief valve (84) in the distribution line to allow for expansion during heat disinfection to drain.

7. A closed loop water purification system as in Claim 1 wherein the filter assembly is a single pass filter.

8. A closed loop water purification system as in Claim 1 wherein the filter assembly is a double pass filter, and wherein the double pass filter may be operated in either parallel or serial mode.

9. A closed loop water purification system as in Claim 1 further including a permeate distribution loop sub-system, and wherein the permeate distribution loop sub-system may comprise a flow line (200) between the distribution line downstream of the take off points and the distribution line upstream of the take off points and a loop recirculating pump (206) to allow for recycle of purified water in the distribution loop sub-system.

10. A closed loop water purification system as in Claim 9, wherein the permeate distribution loop sub-system further comprises a supplementary heater (208).

11. A closed loop purification system as in Claim 1 wherein the feed line includes a constant pressure liquid supply.

## Patentansprüche

1. Wasserreinigungssystem, umfassend:
eine Speisewasserleitung zur Zufuhr von Speisewasser,
eine Hochdruck-Einspeisepumpe (62),
eine Filteranordnung mit einem Einlass (42), die durch die Hochdruck-Einspeisepumpe (62) versorgt wird,
eine Verteilungsleitung (68) und eine Abwasserleitung (70),
**dadurch gekennzeichnet, dass** die Abwasserleitung Abwasser aus der Filteranordnung zu der Speisewasserleitung an einem Kreuzungspunkt (50) in der Speisewasserleitung stromaufwärts der Hochdruck-Einspeisepumpe zurückführt, wobei die Verteilungsleitung mindestens einen Entnahmepunkt von gereinigtem Wasser (86) beliefert und zu dem Kreuzungspunkt (50) in der Speisewasserleitung stromaufwärts der Hochdruck-Einspeisepumpe (62) zurückkehrt, wodurch sie ein System mit geschlossenem Kreislauf bildet,
eine erste Rückflussverhinderungsvorrichtung (48) an der Speisewasserleitung stromaufwärts des Kreuzungspunkts (50),
eine zweite Rückflussverhinderungsvorrichtung (100) an der Verteilungsleitung stromaufwärts des Kreuzungspunkts (50),
eine dritte Rückflussverhinderungsvorrichtung (80) an der Abwasserleitung stromaufwärts des Kreuzungspunkts (50), und
ein Heizsystem (56) in einem von Verteilungsleitung, Abwasserleitung oder Speisewasserleitung.

2. Wasserreinigungssystem mit geschlossenem Kreislauf gemäß Anspruch 1, worin die Filteranordnung eine Umkehrosmose-Filteranordnung ist oder ausgewählt ist aus der Gruppe, umfassend eine Nanofiltrationsanordnung, eine Ultrafiltrationsanordnung, eine Mikrofiltrationsanordnung oder eine Kombination davon.

3. Wasserreinigungssystem mit geschlossenem Kreislauf gemäß Anspruch 1, weiters umfassend eine dynamische Abwasserdrosselung (76) an der Abwasserleitung, um Abwasser zu einem Ablauf (78) abfließen zu lassen, wobei die Abwasserdrosselung durch eine Sensoranordnung (59) kontrolliert wird.

4. Wasserreinigungssystem mit geschlossenem Kreislauf gemäß Anspruch 3, worin die Sensoranordnung ausgewählt ist aus der Gruppe, umfassend einen Mischwasser-Leitfähigkeitssensor, der an der Speisewasserleitung stromabwärts des Kreuzungspunkts lokalisiert ist, einen Strommessfühler an der Speisewasserleitung, oder eine Kombination aus Strommessfühlern an der Speisewasserleitung, der Abwasserleitung und der Verteilungsleitung stromaufwärts des Kreuzungspunkts.

5. Wasserreinigungssystem mit geschlossenem Kreislauf gemäß Anspruch 1, weiters umfassend einen Durchflussregler (94) und eine Rückflussverhinderungsvorrichtung in der Verteilungsleitung für eine korrekte Flussrichtung und zur Bereitstellung eines Prozentsatzes an Umlauf von gereinigtem Wasser in dem Verteilungssystem.

6. Wasserreinigungssystem mit geschlossenem Kreislauf gemäß Anspruch 1, weiters umfassend ein Überdruckventil (84) in der Verteilungsleitung, um das Ablassen der Expansion während einer Heißdesinfektion zu ermöglichen.

7. Wasserreinigungssystem mit geschlossenem Kreislauf gemäß Anspruch 1, worin die Filteranordnung ein Filter mit einmaligem Durchlauf (Single-Pass Filter) ist.

8. Wasserreinigungssystem mit geschlossenem Kreislauf gemäß Anspruch 1, worin die Filteranordnung ein Filter mit zweimaligem Durchlauf (Double-Pass Filter) ist, und wobei der Double-Pass Filter entweder im parallelen oder im seriellen Modus betrieben werden kann.

9. Wasserreinigungssystem mit geschlossenem Kreislauf gemäß Anspruch 1, weiters umfassend ein Subsystem mit einer Permeations-Verteilerschleife, wobei das Subsystem der Permeations-Verteilerschleife einen Vorlauf (200) zwischen der Verteilungsleitung stromabwärts der Entnahmepunkte und der Verteilungsleitung stromaufwärts der Entnahmepunkte und eine Schleifenumlaufpumpe (206), um das Rückführen von gereinigtem Wasser in das Verteilerschleifen-Subsystem zu ermöglichen, umfassen kann.

10. Wasserreinigungssystem mit geschlossenem Kreislauf gemäß Anspruch 9, worin das Subsystem der Permeations-Verteilerschleife einen zusätzlichen Heizer umfasst.

11. Wasserreinigungssystem mit geschlossenem Kreislauf gemäß Anspruch 1, worin die Speiseleitung eine Flüssigkeitszufuhr unter Konstantdruck umfasst.

## Revendications

1. Système d'épuration d'eau, comprenant :
une conduite d'eau d'alimentation pour fournir de l'eau d'alimentation,
une pompe d'alimentation à haute pression (62),
un ensemble filtre comportant une entrée (42) alimentée par la pompe d'alimentation à haute pression (62),
une conduite de distribution (68) et une conduite d'eau de rejet (70),
**caractérisé en ce que** la conduite de rejet renvoie de l'eau de rejet de l'ensemble filtre de la conduite d'eau d'alimentation vers une jonction (50) dans la conduite d'eau d'alimentation en amont de la pompe d'alimentation à haute pression, la conduite de distribution alimentant au moins une prise d'eau épurée (86) et retournant à la jonction (50) dans la conduite d'eau d'alimentation en amont de la pompe d'alimentation à haute pression (62), formant ainsi un système à boucle fermée,
un premier dispositif de non-retour (48) sur la conduite d'eau d'alimentation en amont de la jonction (50),
un deuxième dispositif de non-retour (100) sur la conduite de distribution en amont de la jonction (50),
un troisième dispositif de non-retour (80) sur la conduite d'eau de rejet en amont de la jonction (50), et
un système de chauffage (56) dans une parmi la conduite de distribution, la conduite de rejet ou la conduite d'eau d'alimentation.

2. Système d'épuration d'eau à boucle fermée selon la revendication 1, dans lequel l'ensemble filtre est un ensemble filtre à osmose inverse, ou est sélectionné parmi le groupe comprenant un ensemble de nano-filtration, un ensemble d'ultrafiltration, un ensemble de microfiltration ou une association de ceux-ci.

3. Système d'épuration d'eau à boucle fermée selon la revendication 1, comprenant en outre une restriction d'eau de rejet dynamique (76) sur la conduite d'eau de rejet pour drainer l'eau de rejet vers un drainage (78), la restriction d'eau de rejet étant commandée par un agencement capteur (59).

4. Système d'épuration d'eau à boucle fermée selon la revendication 3, dans lequel l'agencement capteur est sélectionné parmi le groupe comprenant un capteur de conductivité d'eau mélangée positionné sur la conduite d'eau d'alimentation en aval de la jonction, un capteur de mesure de débit sur la conduite d'eau d'alimentation, ou une association de capteurs de mesure de débit sur la conduite d'eau d'alimentation, la conduite d'eau de rejet et la conduite de distribution en amont de la jonction.

5. Système d'épuration d'eau à boucle fermée selon la revendication 1, comprenant en outre un régulateur de débit (94) et un dispositif de non-retour dans la conduite de distribution pour corriger la direction de débit et pour fournir un pourcentage de recirculation d'eau épurée dans le système de distribution.

6. Système d'épuration d'eau à boucle fermée selon la revendication 1, comprenant en outre une soupape de détente de pression (84) dans la conduite de distribution pour permettre l'expansion durant la désinfection thermique vers le drainage.

7. Système d'épuration d'eau à boucle fermée selon la revendication 1, dans lequel l'ensemble filtre est un filtre à passage unique.

8. Système d'épuration d'eau à boucle fermée selon la revendication 1, dans lequel l'ensemble filtre est un filtre à passage double, et dans lequel le filtre à passage double peut fonctionner dans un mode parallèle ou en série.

9. Système d'épuration d'eau à boucle fermée selon la revendication 1, comprenant en outre un sous-système à boucle de distribution d'osmosat, et dans lequel le sous-système à boucle de distribution d'osmosat peut comprendre une conduite d'écoulement (200) entre la conduite de distribution en aval des prises et la conduite de distribution en amont des prises et une pompe de recirculation à boucle (206) pour permettre le recyclage d'eau épurée dans le sous-système à boucle de distribution.

10. Système d'épuration d'eau à boucle fermée selon la revendication 9, dans lequel le sous-système à boucle de distribution d'osmosat comprend en outre un élément de chauffage supplémentaire (208).

11. Système d'épuration à boucle fermée selon la revendication 1, dans lequel la conduite d'alimentation comprend une alimentation en liquide à pression constante.
